# EUROPÄISCHE PATENTANMELDUNG

(11) **EP 1 965 118 A1**
(43) Veröffentlichungstag der Anmeldung: **03.09.2008**
(21) Anmeldenummer: 08003480.4
(22) Anmeldetag: 26.02.2008
(51) Int. Cl.: F16L 37/091, F16L 37/098

(54) **Fitting-System für die Rohrinstallation**

(30) Priorität: 28.02.2007 DE 202007003054 U
(71) Anmelder: Friatec Aktiengesellschaft, 68229 Mannheim (DE)
(72) Erfinder: Milnazik, Peer, 67061 Ludwigshafen (DE)
(74) Vertreter: Tönhardt, Marion

(57) **Zusammenfassung**

Ein Fitting-System für die Rohrinstallation, insbesondere in Sanitär- und Heizungsanlagen, mit mindestens einer Steckkupplung (10), welche einen Grundkörper (12) und eine diesen unter Bildung eines Ringspaltes (16) umgebende Hülse (14) aufweist, wobei die Hülse (14) ein in den Ringspalt (16) ragendes, radial bewegbares, gegebenenfalls mehrteilig ausgebildetes Halteelement (18) umfaßt; und mindestens einem Anschlußstück (20) mit mindestens einem rohrförmigen Ende (22, 24), welches in den Ringspalt (16) der Steckkupplung (10) einschiebbar ist; ist dadurch gekennzeichnet, daß das Anschlußstück (20) beabstandet von der Stirnseite (22, 240) des mindestens einen rohrförmigen Endes (22, 24) zumindest eine Vertiefung (22, 28) aufweist, in die das Halteelement (18) der Steckkupplung (10) bei eingeschobenem rohrförmigen Ende (22, 24) eingreift.

## Beschreibung

Die vorliegende Erfindung betrifft ein Fitting-System für die Rohrinstallation, insbesondere in Sanitär- und Heizungsanlagen, mit mindestens einer Steckkupplung, welche einen Grundkörper und eine diesen unter Bildung eines Ringspaltes umgebende Hülse aufweist, wobei die Hülse ein in den Ringspalt ragendes, radial bewegliches, gegebenenfalls mehrteilig ausgebildetes Halteelement umfaßt; und mindestens einem Anschlußstück mit mindestens einem rohrförmigen Ende, welches in den Ringspalt der Steckkupplung einschiebbar ist. Die Erfindung betrifft weiterhin ein derartiges Anschlußstück, ohne daß es im Zusammenhang mit einem besonderen Fitting-System gesehen wird.

Die Steckkupplungstechnik hat sich gegenüber Schweiß- und Preßtechniken als deutlich überlegen gezeigt, da die Installation vor Ort in einfacher Weise durchgeführt werden kann. Es müssen lediglich vorkonfektionierte Rohre in besondere Steckkupplungen eingesteckt werden, in der sie durch besonders gestaltete Halteelemente gehalten werden.

Ein Beispiel einer solchen Steckkupplung ist in der DE 10 2004 032 134 A1 offenbart. Die Steckkupplung für Rohre enthält einen Grundkörper, bezüglich welchem ein Rohrende fixierbar ist und welcher teilweise in das Rohrende einschiebbar ist. Haltekrallen dienen zur Fixierung des Rohrendes, wobei zur Aufnahme des Rohrendes ein Ringspalt zwischen dem Grundkörper und der Hülse vorhanden ist. Beim Einstecken des Rohrendes werden die Haltekrallen radial nach außen gezwungen, so daß sei eine nach innen gerichtete Radialkraft erzeugen, die das Rohr hält.

Es ist die Aufgabe der vorliegenden Erfindung, ein Fitting-System für die Rohrinstallation, wie oben beschrieben, so zu gestalten, daß auch unter verschiedensten Bedingungen, beispielsweise auch im Übergang zu Metall, eine längskraftschlüssige Verbindung sichergestellt ist.

Diese Aufgabe wird durch ein Fitting-System nach Anspruch 1 gelöst. Vorteilhafte Ausgestaltungen sind Merkmale der Unteransprüche. Ein Anschlußstück, daß universeller einsetzbar ist, ist in Anspruch 9 und den darauf rückbezogenen Unteransprüchen beschrieben.

Erfindungsgemäß ist bei einem Fitting-System für die Rohrinstallation vorgesehen, daß das Anschlußstück beabstandet von der Stirnseite des mindestens einen rohrförmigen Endes zumindest eine Vertiefung aufweist, in die das Halteelement der Steckkupplung bei eingeschobenem rohrförmigen Ende eingreift. Dieser Eingriff, der bevorzugt formschlüssig oder im wesentlichen formschlüssig ist, hat ein besseres Fixieren des Anschlußstücks in der Steckkupplung zur Folge.

Vorteilhaft ist die Vertiefung eine radial umlaufende Ringnut. Dann nämlich kann die Steckkupplung in einer beliebigen Orientierung in bezug auf das Anschlußstück aufgesteckt werden. In einigen Fällen kann es aber ebenso vorteilhaft sein, für eine Indexierung zur sorgen, d. h. für eine definierte Orientierung des Anschlußstückes in bezug auf die Steckkupplung, insbesondere im Zusammenhang mit der weiter unten diskutierten Ausführungsform des Anschlußstückes als Winkelanschlußstück. Um die Indexierung zur Verfügung zu stellen, sind bevorzugt mehrere Vertiefungen vorgesehen, deren Anzahl und Position der Anzahl und Position der Teile des mehrteilig ausgebildeten Halteelementes entspricht.

Um das Verdrehen von Steckkupplung und Anschlußstück gegeneinander zu erleichtern, ist nach einer bevorzugten Ausgestaltung vorgesehen, daß die mehreren Vertiefungen jeweils paarweise durch einen Übergang mit einer Tiefe geringer als der Tiefe der Vertiefungen verbunden ist.

Ebenso bevorzugt ist es, wenn jedes rohrförmige Ende des Anschlußstückes mindestens eine Vertiefung aufweist.

Es ist bereits erwähnt, daß das Anschlußstück vorteilhaft als Winkelanschlußstück ausgebildet sein kann, weil dieses für viele Einbausituationen günstig ist. Obwohl im Regelfall der Winkel ein rechter Winkel sein wird, sind auch andere Winkelgrößen möglich. Bevorzugt ist auch, daß das Winkelstück Schenkel unterschiedlicher Länge hat.

Als Materialien für das Anschlußstück kommen Metall, Kunststoff oder eine Kombination davon in Frage. Die Kombination kann beispielsweise ein Metall-Kunststoff-Verbund sein, es sind aber auch Ausgestaltungen denkbar, bei denen das Anschlußstück an einem Ende aus Kunststoff und an dem anderen Ende aus Metall besteht, wobei ein geeigneter Übergangsbereich zwischen den Materialien vorgesehen ist.

Das Anschlußstück, das Bestandteil eines Fitting-Systems für die Rohrinstallation sein kann, wobei aber die Verwendung der bisher angesprochenen Steckkupplung nicht zwingend ist, weist mindestens ein rohrförmiges Ende auf und ist dadurch gekennzeichnet, daß beabstandet von der Stirnseite des mindestens einen rohrförmigen Endes zumindest eine Vertiefung vorgesehen ist, welche eine radial umlaufende Ringnut sein kann. Wiederum können auch mehrere Vertiefungen an geeigneten Positionen des rohrförmigen Endes vorgesehen sein, die gegebenenfalls paarweise durch einen Übergang mit einer Tiefe geringer als der Tiefe des Vertiefungen verbunden ist. Das Anschlußstück ist bevorzugt als Winkelanschlußstück ausgebildet, wobei die beiden Schenkel einen Winkel gewünschter Größe einschließen. Eine Ausgestaltung, bei der die Schenkel unterschiedliche Länge haben, sorgt für variable Anpassungen an die Einbausituation. Insbesondere bei Winkelanschlußstücken sollte jedes rohrförmige Ende eine Vertiefung, bevorzugt als ringförmige Nut gestaltet, aufweisen. Mit einer solchen Ausgestaltung sind die größtmöglichen Freiheitsgrade in Kombination mit üblichen Steckkupplungen gegeben. Weiter vorteilhaft kann das Anschlußstück einen Gewinde-Direktübergang für den Fremdübergang zu anderen Systemen aufweisen.

Im folgenden soll die Erfindung anhand der beigefügten Zeichnungen näher erläutert werden. Es zeigt:
- Figur 1: ein Anschlußstück nach einer ersten bevorzugten Ausgestaltung der Erfindung;
- Figur 2: das weggebrochene rohrförmige Ende eines Anschlußstückes gemäß einer zweiten bevorzugten Ausführungsform der Erfindung; und
- Figur 3: ein Anschlußstück, das in eine Steckkupplung eingesetzt ist, in teilweise geschnittener Darstellung.

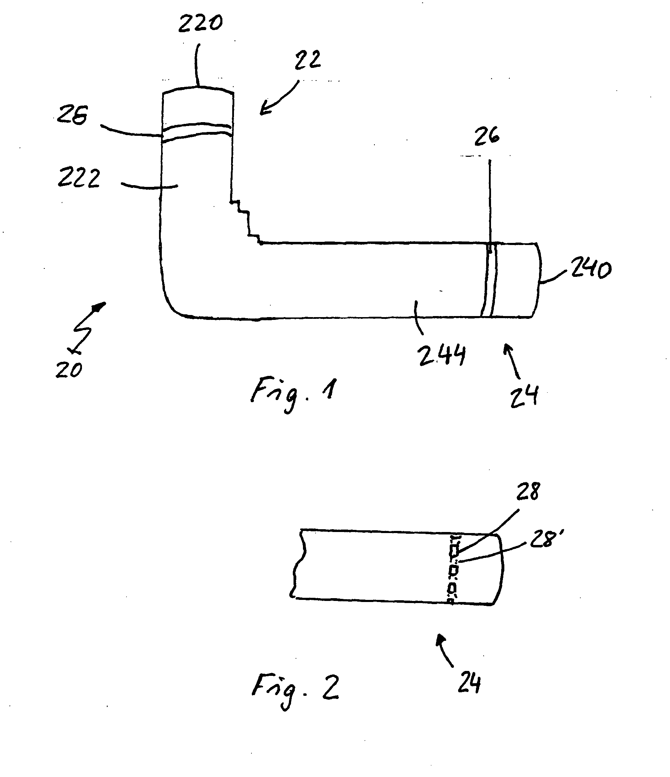

Figur 1 zeigt ein Anschlußstück 20, das bei einem Fitting-System für die Rohrinstallation, insbesondere in Sanitär- und Heizungsanlagen, eingesetzt werden kann. Das Anschlußstück 20 ist als Winkelanschlußstück ausgebildet, wobei zwischen den beiden Schenkeln 222 und 224 ein Winkel von etwa 90° eingeschlossen ist. Der Schenkel 222 ist deutlich kürzer als der Schenkel 224, es sind aber auch gleichschenklige Winkelanschlußstücke denkbar und solche, die andere Winkel als 90° einschließen. Das Anschlußstück 20 ist ein durchgehendes Rohr mit rohrförmigen Enden 22, 24, wobei von der jeweiligen Stirnseite 220 bzw. 240 jedes rohrförmigen Endes 22, 24 beabstandet jeweils eine um das rohrförmige Ende 22, 24 umlaufende Ringnut 26 vorgesehen ist.

Figur 2 zeigt eine Variante des Anschlußstückes, bei der die Ringnut durch eine Vielzahl von Vertiefungen 28 ersetzt ist. Jede einzelne Vertiefung 28 legt eine Winkelposition auf dem rohrförmigen Ende 24 fest und damit eine Indexierungsmöglichkeit des Anschlußstückes in bezug auf eine Steckkupplung oder dergleichen. Beispielsweise können vier solcher Vertiefungen 28 vorgesehen sein, so daß eine relative Winkelpositionierung 90°-Inkrementen möglich wird. Bei üblichen Steckkupplungen sind Haltekrallen vorgesehen, die beispielsweise federvorbelastet auf glatten Rohrflächen aufliegen. Für die eben beschriebene Situation sind zweckmäßigerweise vier Haltekrallen in der Steckkupplung vorgesehen. Zweckmäßig ist auch, wenn die Vertiefungen 28 so dimensioniert werden, daß jede Haltekralle dort im wesentlichen formschlüssig einliegt. Um das Drehen des Anschlußstückes 20 in bezug auf die Steckkupplung zu vereinfachen, sind zwischen jeweils zwei solcher Vertiefungen 28 Übergänge 28' vorgesehen, wobei der Übergang eine Tiefe, von der Oberfläche des rohrförmigen Endes 24 her gesehen, aufweist, die geringer ist als die Tiefe jeder der Vertiefungen 28.

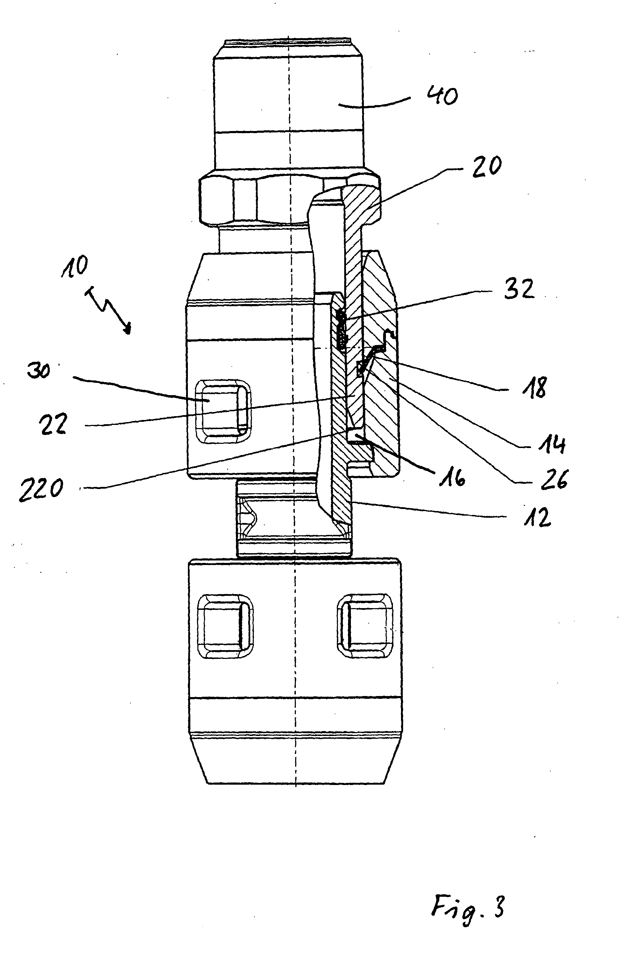

Figur 3 zeigt nun ein Anschlußstück 20 im Zusammenwirken mit einer Steckkupplung 10, beispielsweise einer solchen, wie sie aus der DE 10 2004 032 134 A1 bekannt ist. Die Steckkupplung 10 weist einen Grundkörper 12 eine den Grundkörper 12 umgebende Hülse 14 auf, wobei zwischen Grundkörper 12 und Hülse ein Ringspalt 16 gebildet ist. Die Hülse 14 weist weiterhin ein in den Ringspalt 16 ragendes Halteelement 18 auf, das auch mehrteilig in Form von Haltekrallen ausgebildet sein kann. In den Ringspalt 16 der Steckkupplung 10 ist das rohrförmige Ende 22 des Anschlußstückes 20 eingeschoben. Das Halteelement 18 wird dadurch aufgeweitet, wobei eine nach innen gerichtete Radialkraft entsteht, die auf das rohrförmige Ende 22 wirkt. Von der Stirnseite 220 beabstandet ist eine radial umlaufende ringförmige Ringnut 26 am Anschlußstück 20 vorgesehen, die zum Zusammenwirken mit dem Halteelement 18 gedacht ist. Das Anschlußstück 20 läßt sich nämlich genau so weit in den Ringspalt 16 einschieben, bis das nun federnd belastete Halteelement 18 in Eingriff mit der Ringnut 26 kommt. Bei der Montage wird dieses Einrasten durch ein klickendes Geräusch beim Einsteckens des Anschlußstückes 20 wahrgenommen. Besonders bevorzugt ist, wenn Sichtfenster 30 vorgesehen sind, die dabei helfen, die korrekte Einstecktiefe der Steckverbindung zu überprüfen. Wenn ein solches Sichtfenster 30 ausschließlich das rohrförmige Ende 22 des Anschlußstückes 20 zeigt, ist dieses vollständig in die Steckkupplung 1 eingeschoben. Ein Dichtelement 32, das am Grundkörper 12 radial umlaufend angebracht ist, liegt an der Innenwand des Anschlußstückes 20 an und sorgt für die Fluiddichtigkeit der Verbindung.

Besonders vorteilhaft ist ein Anschlußstück gemäß der Erfindung mit einem Gewinde-Direktübergang für den Fremdübergang zu anderen Systemen versehen, wie er in Figur 3 bis 40 gezeigt ist.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung wesentlich sein.

## Patentansprüche

1. Fitting-System für die Rohrinstallation, insbesondere in Sanitär- und Heizungsanlagen, mit
- mindestens einer Steckkupplung (10), welche einen Grundkörper (12) und eine diesen unter Bildung eines Ringspaltes (16) umgebende Hülse (14) aufweist, wobei die Hülse (14) ein in den Ringspalt (16) ragendes, radial bewegbares, gegebenenfalls mehrteilig ausgebildetes Halteelement (18) umfaßt; und
- mindestens einem Anschlußstück (20) mit mindestens einem rohrförmigen Ende (22, 24), welches in den Ringspalt (16) der Steckkupplung (10) einschiebbar ist;
**dadurch gekennzeichnet, daß** das Anschlußstück (20) beabstandet von der Stirnseite (220, 240) des mindestens einen rohrförmigen Endes (22, 24) zumindest eine Vertiefung (26, 28) aufweist, in die das Halteelement (18) der Steckkupplung (10) bei eingeschobenem rohrförmigen Ende (22, 24) eingreift.

2. Fitting-System nach Anspruch 1, **dadurch gekennzeichnet, daß** die Vertiefung (26, 28) eine radial umlaufende Ringnut (26) ist.

3. Fitting-System nach Anspruch 1, **dadurch gekennzeichnet, daß** mehrere Vertiefungen (28) vorgesehen sind, deren Anzahl und Position der Anzahl und Position der Teile des mehrteilig ausgebildeten Halteelementes (18) entspricht.

4. Fitting-System nach Anspruch 3, **dadurch gekennzeichnet, daß** die mehreren Vertiefungen (28) jeweils paarweise durch einen Übergang (28') mit einer Tiefe geringer als der Tiefe der Vertiefungen (28) verbunden ist.

5. Fitting-System nach einem der Ansprüche 1 bis 4, **dadurch gekennzeichnet, daß** jedes rohrförmige Ende (22, 24) des Anschlußstückes (20) mindestens eine Vertiefung (26, 28) aufweist.

6. Fitting-System nach einem der Ansprüche 1 bis 5, **dadurch gekennzeichnet, daß** das Anschlußstück als Winkelanschlußstück ausgebildet ist.

7. Fitting-System nach Anspruch 6, **dadurch gekennzeichnet, daß** das Winkelanschlußstück Schenkel (222, 244) unterschiedlicher Länge hat.

8. Fitting-System nach einem der Ansprüche 1 bis 6, **dadurch gekennzeichnet, daß** das Anschlußstück (20) einen Direkt-Gewindeübergang (40) aufweist.

9. Fitting-System nach einem der Ansprüche 1 bis 8, **dadurch gekennzeichnet, daß** das Anschlußstück (20) aus Metall, Kunststoff oder einer Kombination daraus besteht.

10. Anschlußstück (20) eines Fitting-Systems für die Rohrinstallation, das mindestens ein rohrförmiges Ende (22, 24) aufweist, **dadurch gekennzeichnet, daß** beabstandet von der Stirnseite (220, 240) des mindestens einen rohrförmigen Endes (22, 24) zumindest eine Vertiefung (26, 28) vorgesehen ist.

11. Anschlußstück (20) nach Anspruch 10, **dadurch gekennzeichnet, daß** die Vertiefung (26, 28) eine radial umlaufende Ringnut (26) ist.

12. Anschlußstück (20) nach Anspruch 10, **dadurch gekennzeichnet, daß** mehrere Vertiefungen (28) an einem rohrförmigen Ende vorgesehen sind.

13. Anschlußstück (20) nach Anspruch 12, **dadurch gekennzeichnet, daß** die mehreren Vertiefungen (28) jeweils paarweise durch einen Übergang (28') mit einer Tiefe geringer als der Tiefe der Vertiefungen (28) verbunden ist.

14. Anschlußstück (20) nach einem der Ansprüche 10 bis 13, **dadurch gekennzeichnet, daß** jedes rohrförmige Ende (22, 24) des Anschlußstückes (20) mindestens eine Vertiefung (26, 28) aufweist.

15. Anschlußstück (20) nach einem der Ansprüche 10 bis 14, **dadurch gekennzeichnet, daß** es als Winkelanschlußstück ausgebildet ist.

16. Anschlußstück (20) nach Anspruch 15, **dadurch gekennzeichnet, daß** das Winkelanschlußstück Schenkel (222, 244) unterschiedlicher Länge hat.

17. Anschlußstück (20) nach einem der Ansprüche 10 bis 16, **dadurch gekennzeichnet, daß** es einen Direkt-Gewindeübergang (49) aufweist.

18. Anschlußstück (20) nach einem der Ansprüche 10 bis 17, **dadurch gekennzeichnet, daß** es aus Metall, Kunststoff oder einer Kombination daraus besteht.
